# EUROPÄISCHE PATENTSCHRIFT

(11) **EP 1 452 411 B1**
(45) Veröffentlichungstag und Bekanntmachung des Hinweises auf die Patenterteilung: **11.01.2006**
(21) Anmeldenummer: 04090032.6
(22) Anmeldetag: 04.02.2004
(51) Int. Cl.: B60R 22/48, B60R 22/343

(54) **Gurtaufroller für einen Sicherheitsgurt**
Seat belt retractor
Enrouleur de ceinture de sécurité

(30) Priorität: 28.02.2003 DE 10310019
(43) Veröffentlichungstag der Anmeldung: 01.09.2004
(73) Patentinhaber: TAKATA-PETRI (Ulm) GmbH, 89081 Ulm (DE)
(72) Erfinder: Schnabl, Roland, 89077 Ulm (DE)
(74) Vertreter: Fischer, Uwe

(56) Entgegenhaltungen:
- FR-A- 2 796 156
- US-A- 5 529 258
- ANONYMOUS: "Automotive seat belt automatic locking retractor engagement detection device" RESEARCH DISCLOSURE, KENNETH MASON PUBLICATIONS, HAMPSHIRE, GB, Bd. 383, Nr. 29, März 1996 (1996-03), XP007120943 ISSN: 0374-4353

## Beschreibung

Die Erfindung bezieht sich auf einen Gurtaufroller für einen Sicherheitsgurt mit den Merkmalen gemäß dem Oberbegriff des Anspruchs 1.

Ein derartiger Gurtaufroller ist aus der europäischen Offenlegungsschrift EP 1 225 105 A2 bekannt. Der vorbekannte Gurtaufroller weist eine Retraktorsperrklinke auf, die das Herausziehen des Sicherheitsgurtes aus dem Gurtaufroller im Falle eines Unfalls sperrt. Die Sperrung der Retraktorsperrklinke kann beispielsweise dadurch ausgelöst werden, dass der Sicherheitsgurt schneller als eine vorgegebene Grenzgeschwindigkeit aus dem Gurtaufroller herausgezogen wird. Der vorbekannte Gurtaufroller weist darüber hinaus eine Straffeinrichtung auf, die den Sicherheitsgurt im Falle einer Gefahrensituation strafft. Zur Straffung des Sicherheitsgurtes wird die Gurtspule des Gurtaufrollers in Gurtaufwickelrichtung gedreht, wodurch der Sicherheitsgurt vom Gurtaufroller aufgerollt und somit gespannt wird. Diese "Straffstellung" des Sicherheitsgurtes wird durch eine Straffersperrklinke fixiert, die in einer Sperrstellung mit einem Ratschenzahnrad des Gurtaufrollers in Eingriff steht und somit den Gurtaufroller in Gurtabwickelrichtung sperrt. Ist die Straffeinrichtung nicht aktiv, weil beispielsweise keine Gefahrensituation vorliegt, so wird die Straffersperrklinke in eine Freigabestellung gebracht, in der sie mit dem Ratschenzahnrad des Gurtaufrollers nicht in Eingriff steht und somit den Gurtaufroller unbeeinflusst lässt.

Der Erfindung liegt die Aufgabe zugrunde, einen Gurtaufroller anzugeben, bei dem die Ansteuerung der Straffersperrklinke besser möglich ist als bei dem vorbekannten Gurtaufroller.

Diese Aufgabe wird ausgehend von einem Gurtaufroller der eingangs angegeben Art erfindungsgemäß durch die kennzeichnenden Merkmale des Anspruchs 1 gelöst. Vorteilhafte Ausgestaltungen der Erfindung sind in Unteransprüchen angegeben.

Danach ist erfindungsgemäß vorgesehen, dass der Straffersperrklinke ein Sensor zugeordnet ist, der die Stellung der Straffersperrklinke überwacht und ein die Stellung der Straffersperrklinke angebendes Signal an die Straffeinrichtung übermittelt.

Ein wesentlicher Vorteil des erfindungsgemäßen Gurtaufrollers ist darin zu sehen, dass die Ansteuerung der Straffersperrklinke durch die Straffeinrichtung aufgrund des Vorhandenseins des Sensors deutlich verbessert bzw. vereinfacht wird. So ist es nämlich möglich, mit dem Sensor die jeweilige Lage der Straffersperrklinke zu bestimmen und somit festzustellen, ob die Straffersperrklinke in der gewünschten Lage, beispielsweise in der Sperrstellung, ist. Falls dies nicht der Fall ist, kann durch entsprechendes Ansteuern der Straffersperrklinke der Fehler behoben und die Straffersperrklinke in die gewünschte Stellung gebracht werden.

Ein zweiter wesentlicher Vorteil des erfindungsgemäßen Gurtaufrollers ist darin zu sehen, dass mit diesem ein größerer Komfort für den Fahrzeuginsassen erreicht wird, als dies ohne Sensor der Fall wäre. Zum Entriegeln der Straffersperrklinke ist es nämlich erforderlich, dass der Gurtaufroller - zumindest geringfügig - in Gurtaufwickelrichtung gedreht wird, um die Straffersperrklinke und ein mit der Straffersperrklinke in Eingriff stehendes Ratschenzahnrad (oder dergleichen) des Gurtaufrollers außer Eingriff zu bringen. Mit dem erfindungsgemäß vorgesehenen Sensor kann nunmehr überwacht werden, in welcher Stellung sich die Straffersperrklinke befindet, so dass beim Entriegeln der Straffersperrklinke die Gurtspule des Gurtaufrollers nur soweit in Gurtaufwickelrichtung gedreht werden muss, wie unbedingt nötigt ist, um ein Umstellen der Straffersperrklinke von der Sperrstellung in die Freigabestellung zu ermöglichen. Der erfindungsgemäße Sensor ist dabei insbesondere dann von großem Vorteil, wenn die Straffersperrklinke und das Ratschenzahnrad eine formschlüssige Verbindung - beispielsweise durch einen Hinterschnitt - bilden und somit nicht ohne weiteres voneinander getrennt werden können; denn in diesem Fall kann mit dem Sensor der Zeitpunkt überwacht werden, ab dem die Straffersperrklinke und das Ratschenzahnrad nicht mehr in Eingriff stehen und getrennt sind.

Ein dritter wesentlicher Vorteil des erfindungsgemäßen Gurtaufrollers ist darin zu sehen, dass bei diesem auch erkannt werden kann, wenn der Fahrzeuginsasse bei einem ersten Straffvorgang der Straffeinrichtung nicht komplett in den Sitz zurückgezogen worden ist und somit der Sicherheitsgurt noch Spiel aufweist bzw. noch lose ist. In einem solchen Fall wird nämlich die in dem Gurtaufroller stets vorhandene Rückstellfeder den Sicherheitsgurt zurückziehen, wodurch die Straffersperrklinke ggf. von ihrer Sperrstellung in die Freigabestellung "ungewollt" überführt wird. Dieses - ungewollte - Umschalten der Straffersperrklinke in die Freigabestellung kann mit dem erfindungsgemäß vorhandenen Sensor detektiert werden, so dass in einem nachfolgenden "zweiten" Straffvorgang die gewünschte Straffung des Sicherheitsgurtes herbeigeführt werden kann. Mit anderen Worten lässt sich bei dem erfindungsgemäßen Gurtaufroller aufgrund des Vorhandenseins des Sensors erreichen, dass der Sicherheitsgurt auch wiederholt gestrafft wird, bis die gewünschte Gurtstraffung erreicht ist.

Besonders einfach und damit vorteilhaft lässt sich die Gurtspule mit Hilfe der Straffersperrklinke arretieren, wenn der Gurtaufroller ein mit der Gurtspule drehfest verbundenes Ratschenzahnrad aufweist, das mit der Straffersperrklinke zusammenwirkt.

Um zu erreichen, dass die Straffersperrklinke in ihrer Sperrstellung verbleibt, auch wenn der zum Umschalten der Stellung der Straffersperrklinke auf diese einwirkende Antrieb abgeschaltet wird, wird es als vorteilhaft angesehen, wenn die Straffersperrklinke in ihrer Sperrstellung mit zumindest einem Zahn des Ratschenzahnrades eine formschlüssige Verbindung bildet.

Die formschlüssige Verbindung kann beispielsweise durch einen Hinterschnitt gebildet sein.

Im Übrigen wird es als vorteilhaft angesehen, wenn die Straffersperrklinke mit einer Rückstelleinrichtung in Verbindung steht, die die Straffersperrklinke selbsttätig von dem Ratschenzahnrad trennt, sobald keine formschlüssige Verbindung zwischen der Straffersperrklinke und dem Ratschenzahnrad mehr besteht. Bei dieser vorteilhaften Ausgestaltung des Gurtaufrollers wird erreicht, dass sich die Straffersperrklinke selbsttätig von dem Ratschenzahnrad trennt, sobald die Gurtspule des Gurtaufrollers und damit das Ratschenzahnrad in Gurtaufwickelrichtung gedreht werden.

Die Rückstelleinrichtung kann besonders einfach und damit vorteilhaft beispielsweise durch eine Rückstellfeder gebildet sein.

Im Übrigen wird es als vorteilhaft angesehen, wenn die Straffeinrichtung derart ausgestaltet ist, dass sie zum Lösen der Sperrstellung der Straffersperrklinke die Gurtspule des Gurtaufrollers in Aufwickelrichtung dreht. Wie bereits erläutert wurde, wird nämlich bei einem Drehen der Gurtspule in Aufwickelrichtung die Straffersperrklinke und das Ratschenzahnrad außer Eingriff gebracht, woraufhin die Rückstelleinrichtung die Straffersperrklinke selbsttätig von der Sperrstellung in die Freigabestellung überführen kann.

Um den Komfort für einen mit dem Sicherheitsgurt geschützten Fahrzeuginsassen zu erhöhen, wird es als vorteilhaft angesehen, wenn zum Entriegeln der Straffeinrichtung eine möglichst geringe Straffkraft auf den Sicherheitsgurt ausgeübt wird. Um dies zu erreichen, ist gemäß einer Fortbildung des Gurtaufrollers vorgesehen, dass die Straffeinrichtung die Gurtspule ausschließlich solange in Gurtaufwickelrichtung dreht, bis der Sensor ein Signal erzeugt, das die Freigabestellung der Straffersperrklinke anzeigt. Bei dieser Ausgestaltung der Erfindung arbeiten die Rückstelleinrichtung und der Sensor "Hand in Hand" miteinander, so werden nämlich bei einem Drehen der Gurtspule in Gurtaufwickelrichtung das Ratschenzahnrad und die Straffersperrklinke außer Eingriff gebracht, woraufhin die Rückstelleinrichtung die Straffersperrklinke selbsttätig von der Sperrstellung in die Freigabestellung überführt; dieses Überführen von der Sperrstellung in die Freigabestellung wird wiederum von dem Sensor erfasst, der ein entsprechendes Signal an die Straffeinrichtung weiterleitet, die daraufhin das weitere Spannen des Sicherheitsgurtes zum Zwecke des Entriegelns der Straffersperrklinke einstellt.

Im Übrigen wird es als vorteilhaft angesehen, wenn die Straffeinrichtung derart ausgestaltet ist, dass sie die Stellung der Straffersperrklinke während des Vorliegens einer Gefahrensituation mit dem Sensor durchgängig überwacht. Bei einem durchgängigen Überwachen der Stellung der Straffersperrklinke lässt sich nämlich sicherstellen, dass diese nicht unbemerkt von der Sperrstellung in die Freigabestellung gelangen und den Sicherheitsgurt lösen kann.

Im Hinblick auf eine Überwachung der Straffersperrklinke wird es als vorteilhaft angesehen, wenn die Straffeinrichtung derart ausgestaltet ist, dass sie den Straffvorgang des Sicherheitsgurtes gegebenenfalls wiederholt, wenn der Sensor die Freigabestellung der Straffersperrklinke signalisiert, obwohl die Gefahrensituation noch nicht beendet ist.

Ein besonders einfacher und kostengünstiger Sensor ist beispielsweise ein Hallsensor, so dass es als vorteilhaft angesehen wird, wenn die Straffersperrklinke zumindest teilweise magnetisch ist und der Sensor durch einen Hallsensor gebildet ist.

Alternativ sind auch andere Arten von Sensoren denkbar; so kann der Sensor beispielsweise ein optischer Sensor sein, der beispielsweise eine optische Lichtschranke zum "Messen" bzw. Bestimmen der Stellung der Straffersperrklinke bildet.

Im Übrigen kann der Sensor auch durch einen elektrischen Schaltkontakt gebildet sein, dessen Schaltzustand anzeigt, ob sich die Straffersperrklinke in der Sperrstellung bzw. Sperrlage oder in der Freigabestellung bzw. Freigabelage befindet.

Zur Erläuterung der Erfindung zeigt
- Figur 1: ein Ausführungsbeispiel für einen erfindungsgemäßen Gurtaufroller, bei dem eine Straffersperrklinke ein Ratschenzahnrad des Gurtaufrollers blockiert, und
- Figur 2: das Ausführungsbeispiel gemäß Figur 1, wobei die Straffersperrklinke und das Ratschenzahnrad außer Eingriff stehen.

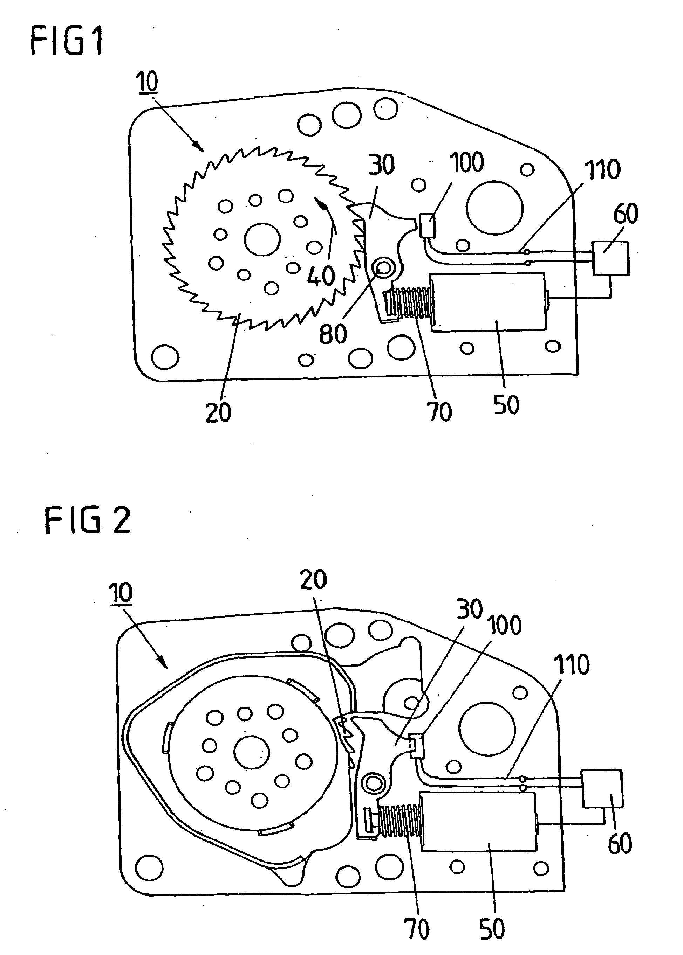

In der Figur 1 erkennt man einen Gurtaufroller 10, dessen Retraktorsperrklinke und dessen Gurtspule zum Aufrollen des Sicherheitsgurts der Übersichtlichkeit halber nicht gezeigt sind. Dargestellt ist in der Figur 1 ein Ratschenzahnrad 20, das drehfest mit der nicht dargestellten Gurtspule des Gurtaufrollers 10 in Verbindung steht.

Mit dem Ratschenzahnrad 20 ist eine Straffersperrklinke 30 derart verbunden, dass das Ratschenzahnrad 20 ausschließlich entlang der Gurtaufwickeirichtung 4ü gedreht werden kann. In Gurtabwickelrichtung, also entgegen der Pfeilrichtung des Pfeils 40, kann das Ratschenzahnrad 20 aufgrund der Sperrstellung der Straffersperrklinke 30 nicht bewegt werden.

In der Figur 1 lässt sich erkennen, dass die Zähne des Ratschenzahnrades 20 und die Straffersperrklinke derart ausgestaltet sind, dass sie eine formschlüssige Verbindung aufgrund eines Hinterschnitts bilden. Aufgrund dieser formschlüssigen Verbindung kann die Straffersperrklinke 30 von ihrer in der Figur 1 dargestellten Sperrstellung nicht ohne weiteres in eine Freigabestellung gebracht werden, in der sie außer Eingriff mit dem Ratschenzahnrad 20 stehen würde.

Wie sich in der Figur 1 darüber hinaus erkennen lässt, ist die Straffersperrklinke 30 mit einem Elektromagneten 50 mechanisch verbunden, der durch eine Steuereinrichtung 60 angesteuert wird. Zwischen der Straffersperrklinke 30 und dem Elektromagneten 50 ist darüber hinaus eine Rückstellfeder 70 vorhanden, die ebenfalls auf die Straffersperrklinke 30 einwirkt.

Der Elektromagnet 50 ist mit der Straffersperrklinke 30 derart verbunden, dass sich mit dem Elektromagneten 50 die Straffersperrklinke 30 in die in der Figur 1 dargestellte Sperrstellung bringen lässt; hierzu muss der Elektromagnet 50 aktiviert werden, also in den "angezogenen" Zustand gebracht werden. Sobald die Straffersperrklinke 30 in Eingriff mit dem Ratschenzahnrad 20 gekommen ist, wird die Sperrstellung der Straffersperrklinke 30 aufgrund der formschlüssigen Verbindung mit dem Ratschenzahnrad 20 fixiert. Selbst nach einem Abschalten des Elektromagneten 50 kann damit die Straffersperrklinke 30 nicht in eine Freigabestellung überführt werden, bevor nicht die formschlüssige Verbindung aufgehoben wird.

Sobald jedoch die formschlüssige Verbindung aufgehoben ist, wird die Rückstellkraft der von dem Elektromagneten 50 gespannten Rückstellfeder 70 auf die Straffersperrklinke 30 einwirken und die Straffersperrklinke 30 von der Sperrstellung in eine Freigabestellung schwenken, und zwar um die Schwenkachse 80. Hierzu ist die Rückstellfeder 70 zwischen der Straffersperrklinke 30 und dem Elektromagneten 50 angebracht.

In der Figur 1 ist darüber hinaus ein Sensor 100 dargestellt, der über Zuleitungen 110 mit der Steuereinrichtung 60 in Verbindung steht. Mit dem Sensor 100 lasst sich die jeweilige Stellung der Straffersperrklinke 30 ermitteln; es lässt sich also ermitteln, ob die Straffersperrklinke 30 in ihrer Sperrstellung oder in ihrer Freigabestellung steht.

Soll nun die Straffersperrklinke 30 von ihrer in der Figur 1 dargestellten Sperrstellung in eine Freigabestellung überführt werden, so muss zunächst das Ratschenzahnrad 20 entlang der Gurtaufwickelrichtung 40 soweit gedreht werden, dass das Ratschenzahnrad 20 und die Straffersperrklinke 30 ihre formschlüssige Verbindung verlieren und außer Eingriff gelangen können. Sobald dies der Fall ist, wird aufgrund der Federkraft der Rückstellfeder 70 die Straffersperrklinke 30 um ihre Schwenkachse 80 geschwenkt und somit außer Eingriff mit dem Ratschenzahnrad 20 gebracht.

Die Stellung der Straffersperrklinke 30 nach einem Schwenken um die Schwenkachse 80 ist in der Figur 2 gezeigt. Man erkennt, dass sich mit dem Sensor 100 feststellen lässt, in welcher Stellung sich die Straffersperrklinke 30 befindet.

Befindet sich die Straffersperrklinke 30 in ihrer Sperrstellung, so wird von dem Sensor 100 ein entsprechendes "Sperrlage"-Signal an die Steuereinrichtung 60 übermittelt; befindet sich hingegen die Straffersperrklinke 30 in ihrer Freigabestellung, so wird ein entsprechendes, die Freigabestellung anzeigendes "Freigabe"-Signal von dem Sensor 100 an die Steuereinrichtung 60 übertragen.

In Abhängigkeit von dem von dem Sensor 100 übertragenen Steuersignal entscheidet die Steuereinheit 60, wie der Elektromagnet 50 und/oder der Antriebsmotor des Gurtaufrollers angesteuert werden müssen. Die Betriebsarten, die die Steuereinrichtung 60 beispielsweise ermöglichen kann, sollen nun kurz zusammengestellt werden:

### 1. Straffen des Sicherheitsgurtes:

Zum Straffen des Sicherheitsgurtes wird die Steuereinrichtung 60 zunächst über eine in den Figuren 1 und 2 nicht dargestellte Steuerleitung einen Antrieb des Gurtaufrollers derart ansteuern, dass die Gurtspule entlang der Gurtaufwickelrichtung 40 gedreht wird.

Durch dieses Drehen der Gurtspule entlang der Gurtaufwickelrichtung 40 wird der Sicherheitsgurt gestrafft, so dass der Sicherheitsgurt fest am Fahrzeuginsassen anliegt. Gleichzeitig oder kurz danach wird die Steuereinrichtung 60 den Elektromagneten 50 derart ansteuern, dass die Straffersperrklinke 30 in Eingriff mit dem Ratschenzahnrad 20 kommt. Die Straffersperrklinke 30 kommt dabei stets vor der Retraktorsperrklinke mit dem Ratschenzahnrad 20 in Eingriff, so dass die Straffersperrklinke 30 lasttragend ist. Falls die auf den Sicherheitsgurt wirkende Zugkraft in Gurtauszugrichtung einen vorgegebenen Maximalwert übersteigt, so würde die drehfeste Verbindung zwischen der Gurtspule und dem Ratschenzahnrad 20 aufgebrochen bzw. aufgehoben werden - beispielsweise durch Abscheren eines Momentenübertragungsstiftes - und die Gurtspule könnte sich wieder drehen. Daraufhin würde dann die voreingesteuerte Retraktorsperrklinke im Gurtaufrollergehäuse bzw. -rahmen lasttragend werden.

Solange jedoch die Straffersperrklinke 30 noch lasttragend ist - also vor einem "Aufbrechen" der drehfesten Verbindung zwischen der Gurtspule und dem Ratschenzahnrad 30 bei "Überlast" - und in das Ratschenzahnrad 20 eingreift, wird ihre "Sperrstellung" aufgrund des Formschlusses mit dem Ratschenzahnrad 20 fixiert, so dass die Straffersperrklinke 30 trotz der Rückstellkraft der "gespannten" Rückstellfeder 70 nicht in die in der Figur 2 dargestellte Freigabestellung zurückschwenken kann.

Aufgrund der Sperrlage der Straffersperrklinke 30 können sich nun weder das Ratschenzahnrad 20 noch die mit dem Ratschenzahnrad 20 drehfest verbundene Gurtspule des Gurtaufrollers 10 in Gurtabwickelrichtung - also entgegen der Pfeilrichtung 40 gemäß der Figur 1 - drehen, so dass der Sicherheitsgurt fest am Fahrzeuginsassen anliegt und in dieser Stellung fixiert ist.

### 2. Lösen der Arretierung:

Stellt die Steuereinrichtung 60 mittels in den Figuren 1 und 2 nicht dargestellter Sensoren fest, dass keine Gefahrensituation mehr vorhanden ist und der Sicherheitsgurt gelöst werden kann, so ist die Straffersperrklinke 30 von ihrer in der Figur 1 dargestellten Sperrstellung in die in der Figur 2 dargestellte Freigabestellung zu schwenken. Da eine solche Schwenkbewegung aufgrund des Formschlusses zwischen der Straffersperrklinke 30 und dem Ratschenzahnrad 20 nicht ohne weiteres möglich ist, muss die Steuereinrichtung 60 den Antriebsmotor des Gurtaufrollers 10 derart ansteuern, dass die Gurtspule und das Ratschenzahnrad 20 entlang der Gurtaufwickelrichtung 40 - wenn auch nur geringfügig - gedreht wird, so dass das Ratschenzahnrad 20 und die Straffersperrklinke 30 außer Eingriff gelangen können. Sobald die Straffersperrklinke 30 nicht mehr von dem Ratschenzahnrad 20 gehalten wird, wird die Straffersperrklinke 30 aufgrund der Rückstellkraft der Rückstellfeder 70 um die Schwenkachse 80 wegschwenken und in die in der Figur 2 dargestellte Freigabestellung gelangen. Dieses "Zurückspringen" der Straffersperrklinke 30 in die Freigabestellung gemäß der Figur 2 wird von dem Sensor 100 festgestellt, der ein entsprechendes "Freigabestellungs"-Signal an die Steuereinrichtung 60 weiterleitet. Daraufhin ist in der Steuereinrichtung 60 bekannt, dass eine weitere Ansteuerung des Antriebsmotors des Gurtaufrollers 10 nicht mehr erforderlich ist und die Gurtspule und das Ratschenzahnrad 20 nicht mehr entlang der Gurtaufwickelrichtung 40 gedreht werden müssen. Eine entsprechende Ansteuerung des Antriebsmotors wird somit sofort abgeschaltet. Aufgrund dieser sofortigen Abschaltung des Antriebsmotors ist sichergestellt, dass zum Deaktivieren der Straffersperrklinke 30 das Ratschenzahnrad 20 und die Gurtspule lediglich soweit in Gurtaufwickelrichtung 40 gedreht werden müssen, wie dies unbedingt erforderlich ist.

### 3. Überwachen der Stellung der Straffersperrklinke 30 während einer Gefahrensituation:

Mit der Steuereinrichtung 60 kann darüber hinaus überwacht werden, ob sich die Straffersperrklinke 30 während des Fortdauems einer Gefahrensituation in der korrekten Position, also in der Sperrstellung befindet. Konkret wird mit der Steuereinrichtung 60 der Sensor 100 ständig überwacht und es wird ständig ermittelt, in welcher Stellung sich die Straffersperrklinke 30 befindet. Wird bei dieser Überwachung des Sensors 100 festgestellt, dass sich die Straffersperrklinke 30 gelöst hat und in ihre Freigabestellung aufgrund der Rückstellkraft der Rückstellfeder 70 überführt wurde, so kann die Steuereinrichtung 60 durch ein erneutes Ansteuern des Elektromagneten 50 die Straffersperrklinke 30 wieder in die Sperrstellung bringen. Aufgrund der Kombination der Steuereinrichtung 60 mit dem Sensor 100 ist es also möglich, auch während des Fortbestehens einer Gefahrensituation sicherzustellen, dass die Straffersperrklinke 30 stets in der erforderlichen Sperrstellung ist.

### 4. Nachstraffen des Sicherheitsgurtes:

Befindet sich der Fahrzeuginsasse bei einem ersten Straffvorgang nicht in der richtigen Sitzposition, so kann es vorkommen, dass trotz der durch die Straffeinrichtung erfolgten Straffung der Sicherheitsgurt nicht korrekt anliegt bzw. dass der Fahrzeuginsasse nicht komplett in den Sitz zurückgezogen wurde. Hat der Sicherheitsgurt nach einer ersten Straffung noch Gurtlose, so wird die in dem Gurtaufroller 10 vorhandene Rückstellfeder die Gurtspule und damit das Ratschenzahnrad 20 entlang der Gurtaufwickelrichtung 40 drehen. Aufgrund dieser Drehung wird die zuvor formschlüssige Verbindung zwischen dem Ratschenzahnrad 20 und der Straffersperrklinke 30 gelöst werden, woraufhin die Rückstellfeder 70 die Straffersperrklinke 30 in die Freigabelage überführen wird. Dieses Verhalten der Straffersperrklinke 30 wird der Sensor 100 feststellen und ein entsprechendes Signal an die Steuereinrichtung 60 übermitteln. Die Steuereinrichtung 60 erkennt daraufhin, dass der Sicherheitsgurt nicht mehr gestrafft ist und wird daraufhin den Antriebsmotor des Gurtaufrollers 10 derart ansteuern, dass die Gurtspule entlang der Gurtaufwickelrichtung 40 gedreht und der Sicherheitsgurt aufgewickelt wird. Nach der damit einhergehenden erneuten Straffung des Sicherheitsgurtes wird die Steuereinrichtung 60 den Elektromagneten 50 ein weiteres Mal so ansteuern, dass die Straffersperrklinke 30 in die Sperrstellung überführt wird und in einen formschlüssigen Eingriff mit dem Ratschenzahnrad 20 gelangt. Zusammengefasst ist es mit der Steuereinrichtung 60 und dem Sensor 100 also möglich, auch eine ungenügende erste Straffung zu erkennen und in einem darauffolgenden zweiten Straffschritt zu korrigieren.

Der in den Figuren 1 und 2 dargestellte Sensor kann beispielsweise ein Hallsensor sein, der mit der Straffersperrklinke 30 zusammenwirkt; hierzu weist die Straffersperrklinke 30 zumindest teilweise einen magnetischen Bereich auf, der von dem Hallsensor 100 erkannt werden kann.

Anstelle eines Hallsensors kann der Sensor 100 auch ein optischer Sensor sein, der beispielsweise eine Lichtschranke bildet, um die Stellung der Straffersperrklinke 30 zu bestimmen.

Der Sensor 100 und die Steuereinrichtung 60, wie sie im Zusammenhang mit den Figuren 1 und 2 erläutert worden sind, können darüber hinaus auch bei anderen Bauarten von Gurtaufrollem eingesetzt werden. In diesem Zusammenhang sei insbesondere beispielsweise auf einen Gurtaufroller hingewiesen, der in den Figuren 1 bis 11 der europäischen Offenlegungsschrift EP 1 225 105 A2 gezeigt und in der Textstelle von Spalte 8, Zeile 55 bis Spalte 15, Zeile 40 detailliert beschrieben ist. Bezüglich der Funktionsweise dieses Gurtaufrollers sei auf die dortigen Erläuterungen verwiesen.

Außerdem können der Sensor 100 und die Steuereinrichtung 60 beispielsweise auch bei einem Gurtaufroller eingesetzt werden, wie er im Zusammenhang mit der Figur 12 und der Textstelle auf Spalte 15, Zeilen 41 bis Spalte 16, Zeilen 18 der genannten europäischen Offenlegungsschrift im Detail beschrieben ist.

Selbstverständlich kann die anhand des Ausführungsbeispiels beschriebene Straffeinrichtung mit dem Sensor 100 und der Steuereinrichtung 60 auch bei allen anderen bekannten Gurtaufrollertypen eingesetzt werden.

### Bezugszeichenliste

- 10: Gurtaufroller
- 20: Ratschenzahnrad
- 30: Straffersperrklinke
- 40: Gurtaufwickelrichtung
- 50: Elektromagnet
- 60: Steuereinrichtung
- 70: Rückstellfeder
- 100: Sensor
- 110: Zuleitung

## Patentansprüche

1. Gurtaufroller (10) für einen Sicherheitsgurt mit einer Gurtspule und einer Retraktorsperrklinke, die das Abwickein des Sicherheitsgurtes von der Gurtspule im Falle eines Unfalls sperrt, und mit einer Straffeinrichtung (30, 50, 60, 70, 100), die in einer Gefahrensituation den Sicherheitsgurt strafft, wobei die Straffeinrichtung eine Straffersperrklinke (30) aufweist, die in einer Sperrstellung die Gurtspule in Gurtabwickelrichtung sperrt und in einer Freigabestellung die Gurtspule unbeeinflusst lässt,
**dadurch gekennzeichnet,**
**dass** der Straffersperrklinke (30) ein Sensor (100) zugeordnet ist, der die Stellung der Straffersperrklinke (30) überwacht und ein die Stellung der Straffersperrklinke (30) angebendes Signal an eine Steuereinrichtung (60) der Straffeinrichtung (30, 50, 60, 70, 100) übermittelt.

2. Gurtaufroller nach Anspruch 1, **dadurch gekennzeichnet, dass** der Gurtaufroffer (10) ein drehfest mit der Gurtspule verbundenes Ratschenzahnrad (20) aufweist, das mit der Straffersperrklinke (30) zusammenwirkt.

3. Gurtaufroller nach Anspruch 2, **dadurch gekennzeichnet, dass** die Straffersperrklinke (30) in ihrer Sperrstellung mit zumindest einem Zahn des Ratschenzahnrades (20) eine formschlüssige Verbindung bildet.

4. Gurtaufroller nach Anspruch 3, **dadurch gekennzeichnet, dass** die formschlüssige Verbindung durch einen Hinterschnitt gebildet ist.

5. Gurtaufroller nach einem der vorangehenden Ansprüche, **dadurch gekennzeichnet, dass** die Straffersperrklinke (30) mit einer Rückstelleinrichtung (70) in Verbindung steht, die die Straffersperrklinke (30) selbsttätig von dem Ratschenzahnrad (20) trennt, sobald keine formschlüssige Verbindung zwischen der Straffersperrklinke (30) und dem Ratschenzahnrad (20) mehr besteht.

6. Gurtaufroller nach Anspruch 5, **dadurch gekennzeichnet, dass** die Rückstelleinrichtung durch eine Rückstellfeder (70) gebildet ist.

7. Gurtaufroller nach einem der vorangehenden Ansprüche, **dadurch gekennzeichnet, dass** die Straffeinrichtung (30, 50, 60, 70, 100) derart ausgestaltet ist, dass sie zum Lösen der Sperrstellung der Straffersperrklinke (30) die Gurtspule in Gurtaufwickelrichtung (40) dreht.

8. Gurtaufroller nach einem der vorangehenden Ansprüche, **dadurch gekennzeichnet, dass** die Straffeinrichtung (30, 50, 60, 70, 100) die Gurtspule ausschließlich solange in Gurtaufwickelrichtung (40) dreht, bis der Sensor (100) ein Signal erzeugt, das die Freigabestellung der Straffersperrklinke (30) anzeigt.

9. Gurtaufroller nach einem der vorangehenden Ansprüche, **dadurch gekennzeichnet, dass** die Straffeinrichtung (30, 50, 60, 70, 100) derart ausgestaltet ist, dass sie die Stellung der Straffersperrklinke (30) während des Vorliegens einer Gefahrensituation mit dem Sensor (100) durchgängig überwacht.

10. Gurtaufroller nach Anspruch 9, **dadurch gekennzeichnet, dass** die Straffeinrichtung (30, 50, 60, 70, 100) derart ausgestaltet ist, dass sie den Straffvorgang des Sicherheitsgurtes wiederholt, wenn der Sensor (100) die Freigabestellung der Straffersperrklinke (30) anzeigt, obwohl die Gefahrensituation noch nicht beendet ist.

11. Gurtaufroller nach einem der vorangehenden Ansprüche, **dadurch gekennzeichnet, dass** der Sensor (100) ein Hallsensor ist und die Straffersperrklinke (30) zumindest teilweise magnetisch ist.

12. Gurtaufroller nach einem der vorangehenden Ansprüche 1 bis 10, **dadurch gekennzeichnet, dass** der Sensor (100) ein optischer Sensor ist.

13. Gurtaufroller nach Anspruch 12, **dadurch gekennzeichnet, dass** der optische Sensor eine Lichtschranke bildet.

## Claims

1. Belt retractor (10) for a seatbelt, having a belt reel and a retractor pawl which blocks the uncoiling of the seatbelt from the belt reel in the event of an accident, and having a tightening device (30, 50, 60, 70, 100) which tightens the seatbelt in a hazardous situation, the tightening device having a tightening pawl (30) which, in a blocking position, blocks the belt reel in the belt uncoiling direction and, in a release position, leaves the belt reel unaffected, **characterized in that** the tightening pawl (30) is assigned a sensor (100) which monitors the position of the tightening pawl (30) and transmits a signal specifying the position of the tightening pawl (30) to a control device (60) of the tightening device (30, 50, 60, 70, 100).

2. Belt retractor according to Claim 1, **characterized in that** the belt retractor (10) has a toothed ratchet wheel (20) which is connected in a rotationally fixed manner to the belt reel and interacts with the tightening pawl (30).

3. Belt retractor according to Claim 2, **characterized in that**, in its blocking position, the tightening pawl (30) forms a form-fitting connection with at least one tooth of the toothed ratchet wheel (20).

4. Belt retractor according to Claim 3, **characterized in that** the form-fitting connection is formed by an undercut.

5. Belt retractor according to one of the preceding claims, **characterized in that** the tightening pawl (30) is connected to a restoring device (70) which automatically separates the tightening pawl (30) from the toothed ratchet wheel (20) as soon as there is no longer a form-fitting connection between the tightening pawl (30) and the toothed ratchet wheel (20).

6. Belt retractor according to Claim 5, **characterized in that** the restoring device is formed by a restoring spring (70).

7. Belt retractor according to one of the preceding claims, **characterized in that** the tightening device (30, 50, 60, 70, 100) is designed in such a manner that it rotates the belt reel in the belt coiling-up direction (40) to release the blocking position of the tightening pawl (30).

8. Belt retractor according to one of the preceding claims, **characterized in that** the tightening device (30, 50, 60, 70, 100) rotates the belt reel exclusively in the belt coiling-up direction (40) until the sensor (100) produces a signal which indicates the release position of the tightening pawl (30).

9. Belt retractor according to one of the preceding claims, **characterized in that** the tightening device (30, 50, 60, 70, 100) is designed in such a manner that it continuously monitors the position of the tightening pawl (30) with the sensor (100) during the presence of a hazardous situation.

10. Belt retractor according to Claim 9, **characterized in that** the tightening device (30, 50, 60, 70, 100) is designed in such a manner that it repeats the tightening process of the seatbelt if the sensor (100) indicates the release position of the tightening pawl (30) although the hazardous situation has not yet ended.

11. Belt retractor according to one of the preceding claims, **characterized in that** the sensor (100) is a Hall sensor and the tightening pawl (30) is at least partially magnetic.

12. Belt retractor according to one of the preceding Claims 1 to 10, **characterized in that** the sensor (100) is an optical sensor.

13. Belt retractor according to Claim 12, **characterized in that** the optical sensor forms a light barrier.

## Revendications

1. Enrouleur de ceinture (10) pour une ceinture de sécurité comportant un rouleau de ceinture et un cliquet de blocage anti-retrait, qui, dans le cas d'un accident, bloque le déroulement de la ceinture de sécurité à partir du rouleau de ceinture, et un dispositif tendeur (30, 50, 60, 70, 100) qui tend la ceinture de sécurité dans une situation de danger, le dispositif tendeur comportant un cliquet de blocage de tendeur (30) qui, dans une position de blocage, bloque le rouleau de ceinture dans la direction de déroulement de la ceinture et, dans une position de libération, laisse sans influence le rouleau de ceinture,
**caractérisé en ce**
**qu'**au cliquet de blocage de tendeur (30) est associé un capteur (100), qui contrôle la position du cliquet de blocage de tendeur (30) et transmet un signal indiquant la position du cliquet de blocage de tendeur (30) à un dispositif de commande (60) du dispositif tendeur (30, 50, 60, 70, 100).

2. Enrouleur de ceinture selon la revendication 1, **caractérisé en ce que** l'enrouleur de ceinture (10) comporte une roue dentée à cliquet (20), qui est reliée solidairement en rotation au rouleau de ceinture et coopère avec le cliquet de blocage de tendeur (30).

3. Enrouleur de ceinture selon la revendication 2, **caractérisé en ce que** dans sa position de blocage, le cliquet de blocage de tendeur (30) forme avec au moins une dent de la roue dentée à cliquet (20), une liaison par formes complémentaires.

4. Enrouleur de ceinture selon la revendication 3, **caractérisé en ce que** la liaison par formes complémentaires est formée par une partie en contre-dépouille.

5. Enrouleur de ceinture selon l'une des revendications précédentes, **caractérisé en ce que** le cliquet de blocage de tendeur (30) est relié à un dispositif de rappel (70), qui sépare automatiquement le cliquet de tendeur de blocage (30) de la roue dentée à cliquet (20) dès qu'une liaison par formes complémentaires n'existe plus entre le cliquet de blocage de tendeur (30) et la roue dentée à cliquet (20).

6. Enrouleur de ceinture selon la revendication 5, **caractérisé en ce que** le dispositif de rappel est formé par un ressort de rappel (70).

7. Enrouleur de ceinture selon l'une des revendications précédentes, **caractérisé en ce que** le dispositif tendeur (30, 50, 60, 70, 100) est agencé de telle sorte que pour le desserrage de la position bloquée du cliquet de blocage de tendeur (30), le dispositif tendeur fait tourner le rouleau de ceinture dans le sens (40) de l'enroulement de la ceinture.

8. Enrouleur de ceinture selon l'une des revendications précédentes, **caractérisé en ce que** le dispositif tendeur (30, 50, 60, 70, 100) fait tourner le rouleau de ceinture dans le sens (40) d'enroulement de la ceinture exclusivement jusqu'à ce que le capteur (100) produise un signal qui indique la libération du cliquet de blocage de tendeur (30).

9. Enrouleur de ceinture selon l'une des revendications précédentes, **caractérisé en ce que** le dispositif tendeur (30, 50, 60, 70, 100) est agencé de telle sorte qu'il contrôle de façon permanente la position du cliquet de blocage de tendeur (30) lors de la présence d'une situation de danger à l'aide du capteur (100).

10. Enrouleur de ceinture selon la revendication 9, **caractérisé en ce que** le dispositif tendeur (30, 50, 60, 70, 100) est agencé de telle sorte qu'il répète le processus de mise en tension de la ceinture de sécurité lorsque le capteur (100) indique la position de libération du cliquet de blocage de tendeur (30), bien que la situation de danger ne soit pas encore terminée.

11. Enrouleur de ceinture selon l'une des revendications précédentes, **caractérisé en ce que** le capteur (100) est un capteur à effet Hall, et le cliquet de blocage de tendeur (30) est au moins partiellement magnétique.

12. Enrouleur de ceinture selon l'une des revendications précédentes 1 à 10, **caractérisé en ce que** le capteur (100) est un capteur optique.

13. Enrouleur de ceinture selon la revendication 12, **caractérisé en ce que** le capteur optique forme un relais photoélectrique.
